# EUROPÄISCHE PATENTSCHRIFT

(11) **EP 1 108 155 B1**
(45) Veröffentlichungstag und Bekanntmachung des Hinweises auf die Patenterteilung: **02.07.2003**
(21) Anmeldenummer: 99945996.9
(22) Anmeldetag: 19.08.1999
(51) Int. Cl.: F16D 65/12

(54) **BREMSSCHEIBE UND ZUGEHÖRIGE ACHSNABE**
BRAKE DISK AND CORRESPONDING AXLE HUB
DISQUE DE FREINAGE ET MOYEU D'ESSIEU CORRESPONDANT

(30) Priorität: 02.09.1998 DE 19839844
(43) Veröffentlichungstag der Anmeldung: 20.06.2001
(73) Patentinhaber: KNORR-BREMSE Systeme für Nutzfahrzeuge GmbH, 80809 München (DE)
(72) Erfinder: BAUMGARTNER, Hans, D-85368 Moosburg (DE); PAHLE, Wolfgang, D-74080 Heilbronn (DE)
(86) Internationale Anmeldenummer: EP9906069
(87) Internationale Veröffentlichungsnummer: WO00014423

(56) Entgegenhaltungen:
- WO-A-93/14945
- DE-A- 19 628 331
- DE-A- 19 648 582
- DE-B- 1 222 962
- DE-C- 19 544 559
- DE-C- 19 751 522
- FR-A- 1 326 205

## Beschreibung

Die Erfindung betrifft eine Bremsscheibe nach dem Oberbegriff des Anspruches 1 und eine Achsnabe nach dem Oberbegriff des Anspruches 8.

Eine Bremsscheibe in "zweiteiliger" Ausführung, ist aus dem deutschen Patent DE 195 44 559 C1 bekannt Zur Verbindung der Bremsscheibe mit der Nabe sind bei der DE 195 44 559 C1 dieser Bremsscheibe Zwischenelemente zur Drehmoment- und Kraftübertragung von den Nocken der Nabe auf die Abstützelemente der Scheibe vorgesehen, welche z.B. durch Bolzen an den Nocken der Nabe befestigbar sind. Dabei greifen einerseits die Nocken der Nabe in die Zwischenelemente und andererseits die Zwischenelemente in die Abstützelemente ein, so daß in beiden Drehrichtungen eine sichere Drehmomentübertragung von der Bremsscheibe auf die Nabe gewährleistet ist

Die Bremsscheibe der DE 195 44 559 C1 hat sich an sich bewährt, wünschenswert ist aber die weitere Minimierung der Temperaturunempfindlichkeit der Bremsscheibe bei hohen Belastungen. Insbesondere soll die Neigung der Bremsscheibe zur Rißbildung verringert werden.

Aus der FR 901 778 sind eine Bremsscheibe und eine Achsnabe gattungsgemäßer Art bekannt. Ausgehend von diesem Stand der Technik ist es die Aufgabe der Erfindung, die Temperaturempfindlichkeit bei Bremsscheibe und Nabe weiter zu verringern. Es soll also auch die entsprechende Ausgestaltung der Achsnabe zum Aufsetzen der Bremsscheibe optimiert werden.

Die Erfindung erreicht dieses Ziel durch die Gegenstände der Ansprüche 1und 8, deren Gegenstände jeweils für sich betrachtet die Belastbarkeit der Bremsscheibe deutlich erhöhen und die sich in ihrer Kombination zu einer ganz besonders vorteilhaften und hoch belastbaren Bremsscheibe (und Achsnabe) ergänzen.

Die Erfindung löst diese Aufgabe durch die Gegenstände der Ansprüche 1 und 8. Dabei überbrücken die Abstützelemente am Innenumfang der Bremsscheibe stegartig den Luftkanal und ragen in dem in Anspruch 1 angegebenen Verhältnis weit axial in den Bereich der Reibringe hinein, daß die Außenflächen der Reibringe - insbesondere auch noch in ihrem maximal zulässigen Verschleißzustand - axial zu den Außenflächen der Abstützelemente beabstandet sind, wobei der Abstand der Außenflächen der Abstütz-elemente in dem im Anspruch 1 angegebenen Verhältnis liegt.

Diese Lösung hat gegenüber dem gattungsgemäßen Stand der Technik den besonderen Vorteil, daß die bei Bremsungen thermisch hochbelasteten Reibflächen von den mechanisch (durch die Bremskräfte) stark beanspruchten Abstützelementen getrennt werden.

Zwar ist es aus dem Bereich der Schienenfahrzeug-Bremsscheiben (siehe die DE 38 14 614 A1) bereits bekannt, die Abstützelemente (gelegentlich auch Zähne genannt) axial in den Bereich des Luftkanales zu legen, wobei die Abstützelemente als radial von den Stegen der Bremsscheibe nach innen verlängerte Noppen ausgebildet werden. Diese Lösung läßt sich jedoch auf Bremsscheiben für Nutzfahrzeuge, insbesondere mit einem Gewicht von mehr als 7,5t, aufgrund der sehr viel größeren bei Bremsungen auftretenden Kräfte nicht übertragen. Es ist daher vorteilhaft, daß die Erfindung durch das Hineinragen der Abstützelemente in die Reibringe hinein die mechanische Festigkeit erhöht.

Zwar wäre es femer auch denkbar, die Abstützelemente über den Luftkanal hinweg axial bis an die Außenflächen der Reibringe heranzuführen. Diese Lösung hätte aber den Nachteil, daß sich in den "Füßen" der Abstützelemente hohe thermische und mechanische Belastungen überlagern würden, was die Neigung der Bremsscheibe zur Rißbildung deutlich erhöhen würde. Hier schafft die Erfindung eine deutliche Verbesserung durch die örtliche Trennung der Reibfläche von der Außenseite der Abstützelemente.

Die Ausführungsform des Anspruches 2 zeichnet sich weiterhin dadurch aus, daß die Abstützelemente mit Zuleitungen für Kühlluft in den Luftkanal versehen sind. Auch diese Ausführungsform sorgt für ein deutlich verbessertes thermisches Verhalten der radial verzahnten Bremsscheiben. Die Bremsscheibe ist mit einem aus Rippen oder Noppen gebildeten Luftkanal zwischen den beiden Reibringen versehen, was aus dem eingangs genannten Stand der Technik an sich bekannt ist. Durch diese Variante der Erfindung kann zusätzliche Kühlluft durch die Abstützelemente hindurch strömen und damit die Kühlwirkung des Kühlluftkanales deutlich erhöhen. Auch diese Maßnahme sorgt damit für ein verbessertes thermisches Verhalten der Bremsscheibe gegenüber dem Stand der Technik. Zweckmäßig werden die Zuleitungen als im wesentlichen radial zur Bremsscheibe verlaufende Bohrungsen ausgebildet.

Nach Anspruch 8 wird die Kühlung der Bremsscheibe auf konstruktiv einfache Weise weiter erhöht.

Weitere vorteilhafte Varianten der Erfindung sind den übrigen Unteransprüchen zu entnehmen.

Nachfolgend wird die Erfindung unter Bezug auf die Zeichnung anhand von Ausführungsbeispielen näher beschrieben. Es zeigen:
Fig. 1 eine Seitenansicht eines erstes Ausführungsbeispieles der Erfindung;
Fig. 2 eine Schnittansicht A-A aus Fig. 1;
Fig. 3 eine Schnittansicht B-B aus Fig.2;
Fig. 4 eine Ausschnittsvergrößerung aus Fig.3;
Fig. 5 eine Ausschnittsvergrößerung aus Fig.2;
Fig. 6 eine Seitenansicht einer auf eine Achsnabe gesetzten Bremsscheibe eines weiteren Ausführungsbeispiels der Erfindung;
Fig. 7 eine Schnittansicht A-A aus Fig.8;
Fig. 8 eine Seitenansicht einer auf eine Achsnabe gesetzten Bremsscheibe eines dritten Ausführungsbeispiels der Erfindung;
Fig. 9 eine Schnittansicht A-A aus Fig.8;
Fig. 10 eine perspektivische Ansicht eines vierten Ausführungsbeispiels der Erfindung;
Fig. 11 eine weitere perspektivische Ansicht des Ausführungsbeispiels aus Fig. 10 unter Fortlassung eines Teilbereiches eines Rreibringes;
Fig. 12 eine Seitenansicht des Ausführungsbeispiel aus Fig. 10;
Fig. 13 eine Schnittansicht A-A aus Fig. 12;
Fig. 14 eine Rückansicht des Ausführungsbeispieles aus Fig. 10 bis 12.

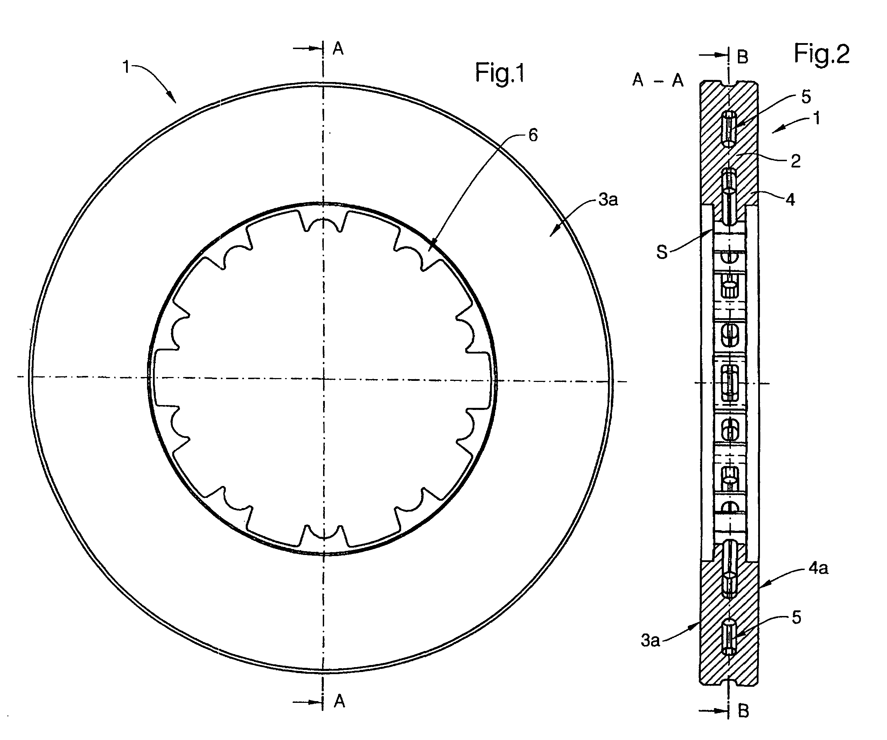

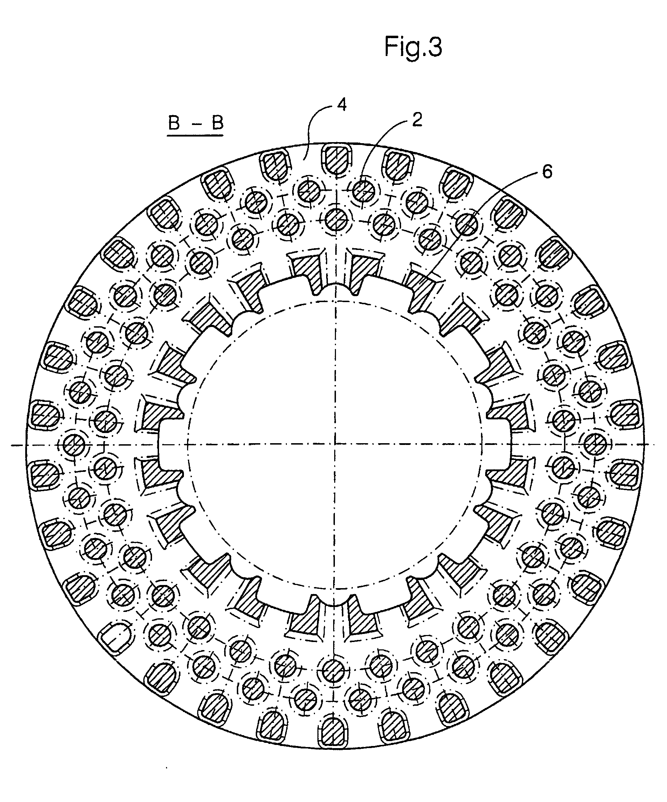

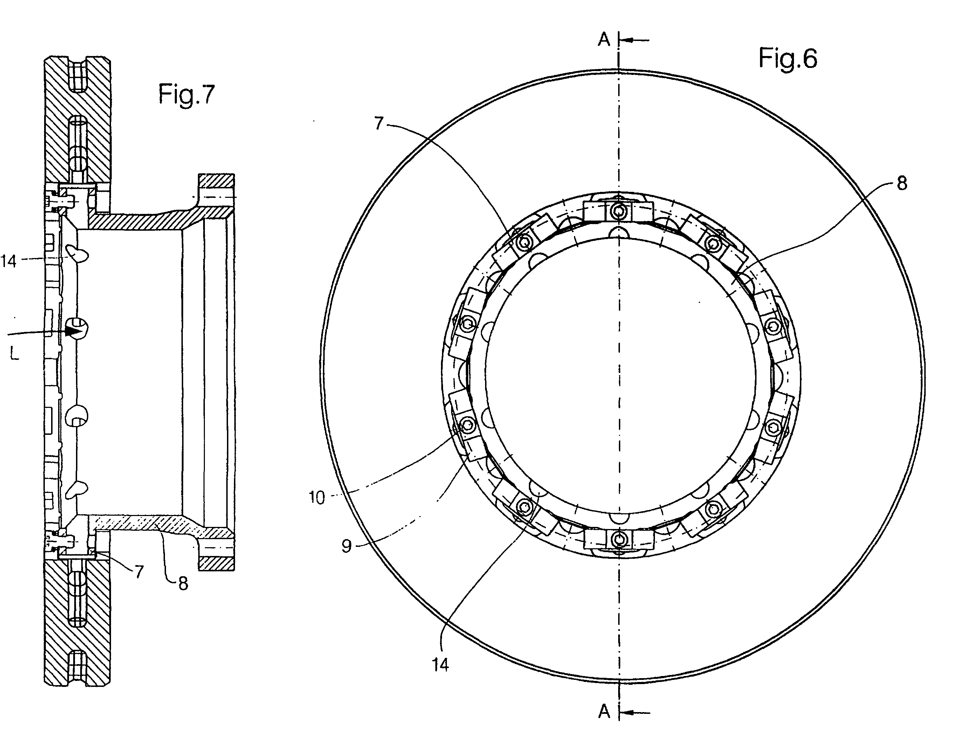

Fig. 1, 2 und 3 zeigen eine Draufsicht auf eine Bremsscheibe 1 für Scheibenbremsen von Nutzfahrzeugen. Die Bremsscheibe 1 weist zwei über Stege 2, die in mehreren konzentrischen Ringen angeordnet sind, miteinander verbundene Reibringe 3, 4 auf, so daß zwischen den Reibringen 3, 4 ein Belüftungskanal (Luftkanal) 5 ausgebildet ist. An den inneren Umfangsbereich der Bremsscheibe 1 sind Abstützelemente 6 angeformt, die (siehe Fig. 6 und 7) zum zahnartigen Eingriff in Nocken 7 einer Achsnabe 8 ausgelegt sind, wobei klammerartige, U-förmige und axial aufsetzbare Zwischenelemente 9, die mittels Bolzen 10 befestigt sind. für einen sicheren axialen (und radialen) Sitz der Bremsscheibe 1 auf der Nabe 7 sorgen.

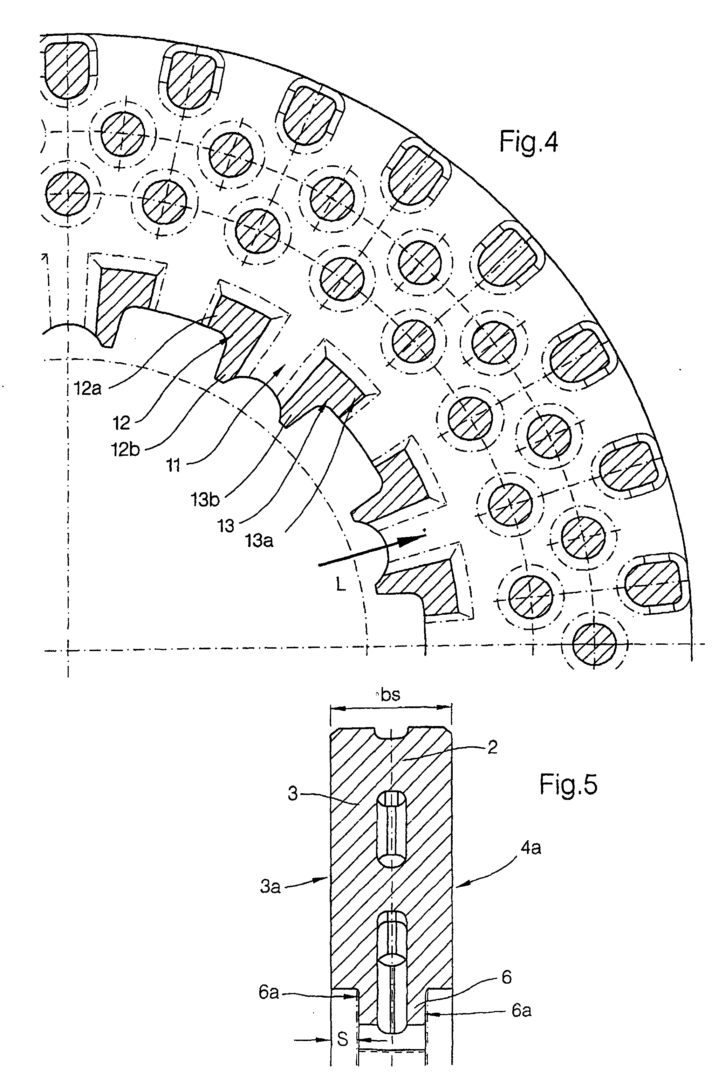

Wie besonders gut in Fig. 4 und 5 zu erkennen, überbrücken die Abstützelemente 6 am Innenumfang der Bremsscheibe 1 stegartig den Luftkanal 5 und ragen dabei so weit axial in den Bereich der Reibringe 3, 4 hinein bzw. sind einstückig an diese innen angeformt, daß die Außenflächen 3a, 4a der Reibringe 3, 4 (gestrichelt Smax) auch in ihrem maximal zulässigen Verschleißzustand axial von den Außenflächen 6a der Abstützelemente beabstandet bleiben, so daß selbst im maximalen Verschleißzustand noch eine gewisse Trennung zwischen dem Ort maximaler thermischer und dem Ort maximaler mechanischer Belastung gegeben bleibt (was auch der mittige Schnitt durch durch die Bremsscheibe 1 gemäß Fig. 2 zeigt). Der Abstand der Außenflächen 3a, 4a zu den Außenflächen 6a der Abstützelemente ist mit s bezeichnet und beträgt hier bei einer Scheibendicke bs=45 mm 10 mm. Bevorzugte gilt das Verhältnis: 3 <= bs/s <= 6.

Wie ebenfalls gut in Fig. 4 und 5 zu erkennen, sind die Abstützelemente 6 mit vorteilhaften Zuleitungen 11 für Kühlluft (Strom L) in den Luftkanal 5 versehen. Die Abstützelemente 6 (siehe hierzu auch Fig. 4) bestehen im wesentlichen aus zwei L-förmigen Abschnitten 12, 13, welche zusammen auch eine Art T-Form ausbilden, wobei der Steg des T bzw. die Grundseiten 12a, 13a der beiden L-förmigen Abschnitte 12, 13 radial in den Luftkanal 5 hineinragen und die Längsschenkel 12b, 13b der L-förmigen Abschnitte 12, 13 jeweils radial nach innen über den Innenumfang der Reibringe 3, 4 vorstehen. Die beiden L-förmigen Abschnitte 12, 13 sind jeweils voneinander abgewandt ausgerichtet und gewährleisten eine großflächige Krafteinleitung in die Reibringe 3, 4.

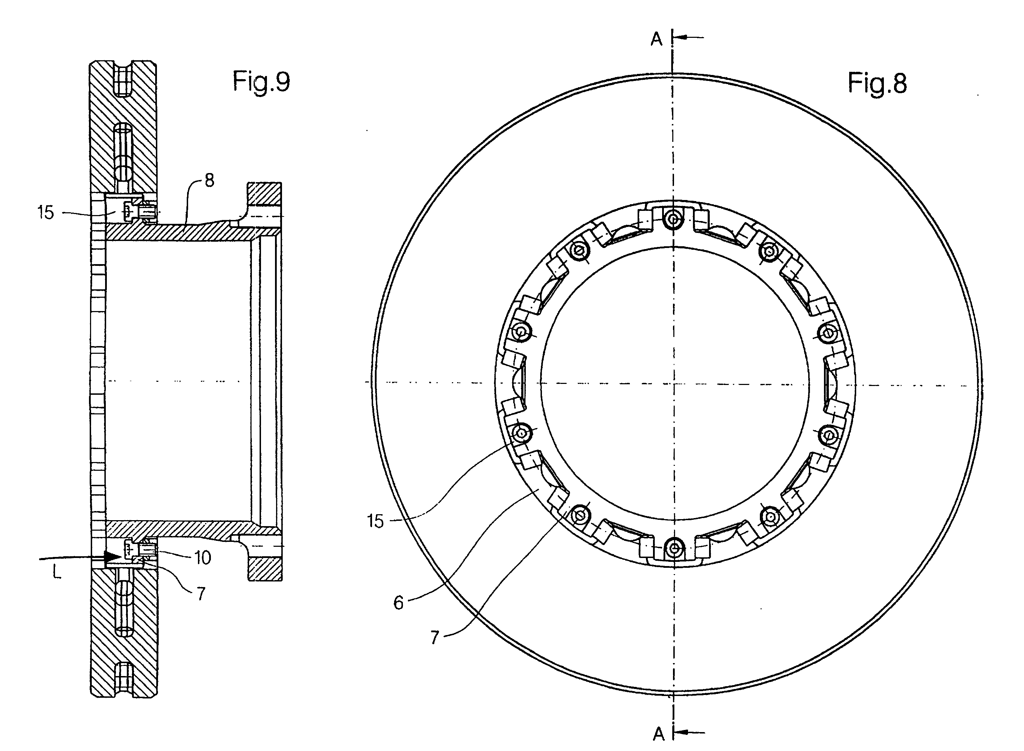

Damit auch im montierten Zustand der Bremsscheibe 1 auf die topfartige Achsnabe 8 bzw. den Nabenabschnitt die Belüftung nicht durch die Achsnabe 8 verdeckt wird, ist die Achsnabe bzw. ein optionaler Adapter (nicht dargestellt) mit im wesentlichen radial verlaufenden Nabenbohrungen 14 (siehe Fig. 6 und 7) oder mit seitlichen bzw. axialen Nabenöffnungen 15 (siehe Fig. 8 und 9) versehen, welche vom Nabeninnenumfang radial oder axial zu den Zuleitungen 11 führen und dabei im Zusammenwirken mit den radialen Zuleitungen 11 und ggf. weiteren Öffnungen in der Fahrzeugnabe stets eine gute Kühlleistung gewährleisten.

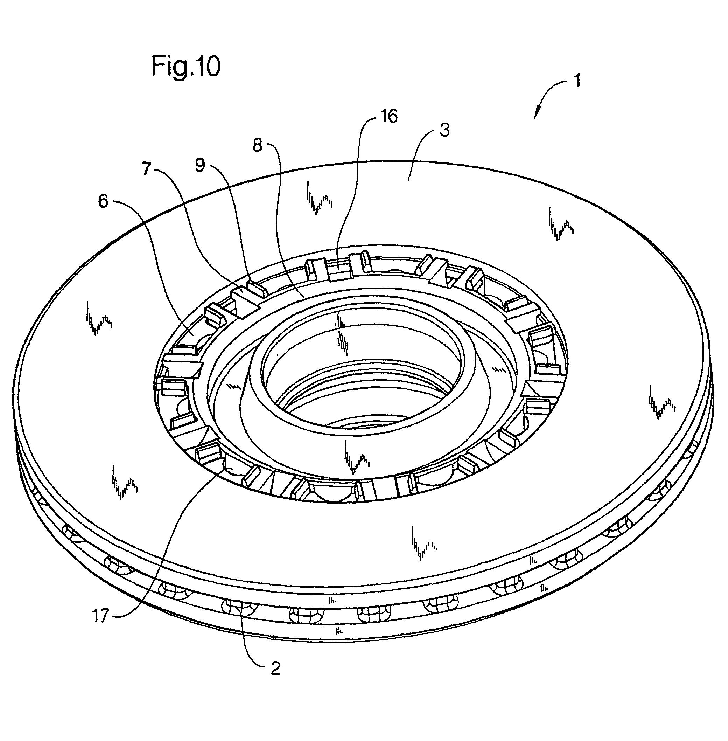

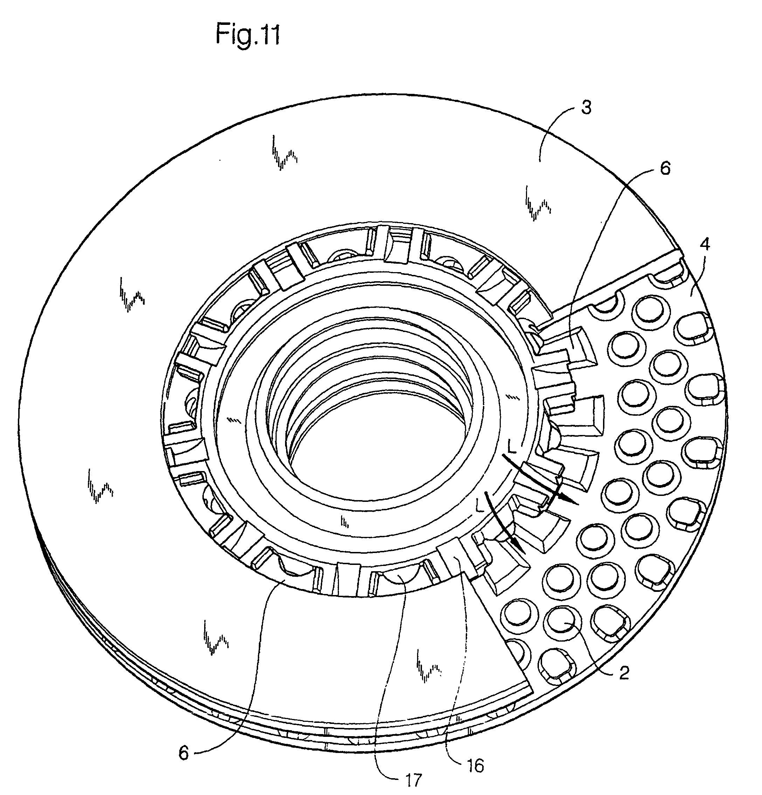

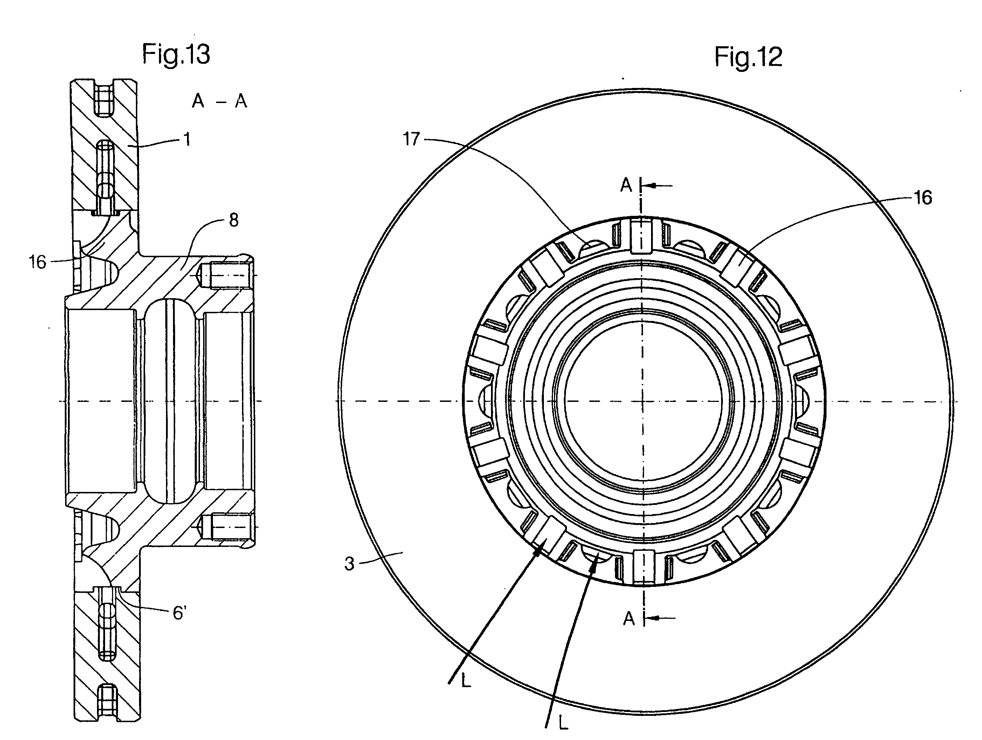

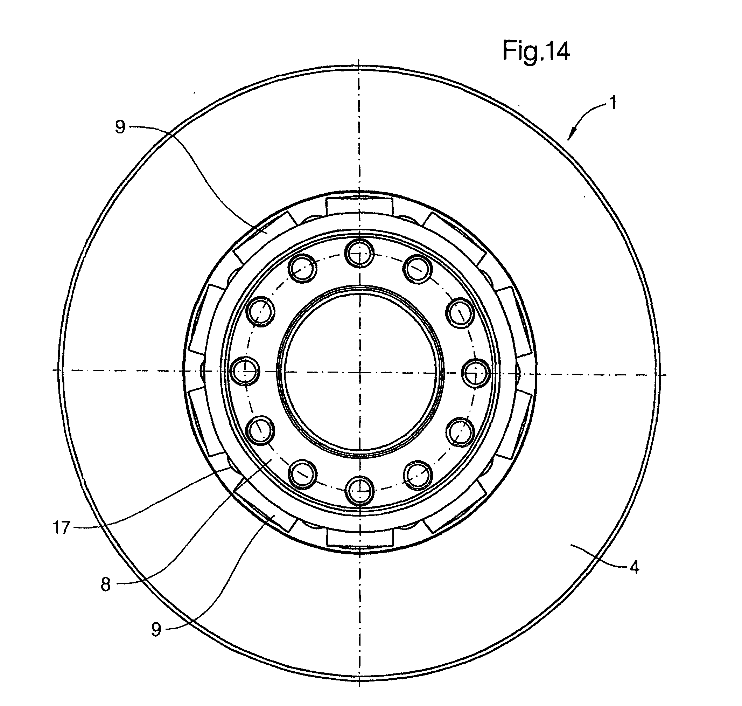

Fig. 10 bis 14 zeigen eine kombinierte Kühlluftzuleitung durch optionale seitliche Nockenöffnungen 16 in den Nocken 7 der Nabe 8 und durch zwischen den L-förmigen Abschnitten 12 und 13 und der Nabe 8 beim Zusammenbau von Nabe 8 und Bremsscheibe 1 verbleibende seitliche Öffnungen 17. Damit wird durch die seitlichen Nockenöffnungen 16 der Nocken 7 direkt Luft durch die Nabe 8 in den Luftkanal 5 und durch die Öffungen 17 und die Zuleitungen 11 zusätzliche Luft in den Luftkanal 5 geleitet. Die Nockenöffnungen 16 erstrecken sich von den axialen Außenseiten der Nocken 7 bohrungsartig in den Luftkanal 5 hinein und verlaufen geneigt zur Bremsscheibenebene.

### Bezugszeichen

- Bremsscheibe: 1
- Stege: 2
- Reibringe: 3, 4
- Luftkanal: 5
- Abstützelemente: 6
- Nocken: 7
- Achsnabe: 8
- Zwischenelemente: 9
- Bolzen: 10
- Zuleitungen: 11
- Abschnitte: 12, 13
- Grundseiten: 12a, 13a
- Längsschenkel: 12b, 13b
- Bohrungen: 14
- Nabenöffnungen: 15
- Nockenöffnungen: 16
- Öffnungen: 17

## Patentansprüche

1. Bremsscheibe für Scheibenbremsen von Fahrzeugen, inbesondere für pneumatisch betätigte Scheibenbremsen von Nutzfahrzeugen, welche folgendes aufweist:
zwei über Stege (2) miteinander verbundene Reibringe (3, 4), zwischen denen wenigstens ein Luftkanal (5) ausgebildet ist,
an den inneren Umfangsbereich der Bremsscheibe angeformte Abstützelemente (6), die zum Eingriff in Nocken einer Nabe an einer Achse des (NutzFahrzeuges ausgelegt sind, wobei
die Abstützelemente (6) am Innenumfang der Bremsscheibe (1) stegartig den Luftkanal (5) überbrücken und dabei die Außenflächen (3a, 4a) der Reibringe (3, 4) axial zu den Außenflächen (6a) der Abstützelemente (6) beabstandet sind, **dadurch gekennzeichnet, daß** der Abstand s. der Außenflächen (3a, 4a) der Reibringe (3, 4) zu den Außenflächen (6a) der Abstützelemente (6) folgende Bedingung erfüllt 3⇐bs/s.⇐6, wobei bs die Scheibendicke angibt.

2. Bremsscheibe, nach Anspruch 1, **dadurch gekennzeichnet, daß** die Abstützelemente (6) mit Zuleitungen (11) für Kühlluft in den Luftkanal (5) versehen sind.

3. Bremsscheibe nach Anspruch 2, **dadurch gekennzeichnet, daß** die Zuleitungen als im wesentlichen radial zur Bremsscheibe verlaufende Bohrungen (11) ausgebildet sind.

4. Bremsscheibe nach einem der Ansprüche 1 bis 3, **dadurch gekennzeichnet, daß** die Abstützelemente (6) im wesentlichen die Form eines T haben, wobei die Stege des T jeweils mit der radial verlaufenden Zuleitung (11) für Kühlluft versehen sind.

5. Bremsscheibe nach einem der vorstehenden Ansprüche, **dadurch gekennzeichnet, daß** die T-förmigen Abstützelemente (6) jeweils zwei aus zwei L-förmigen Abschnitten (12, 13) gebildet sind, wobei die Grundseiten (12a, 13a) der beiden L-förmigen Abschnitte (12, 13) aneinanderliegen, radial in den Luftkanal (5) hineinragen und die Längsschenkel (12b, 13b) der L-förmigen Abschnitte (12, 13) jeweils radial nach innen über den Innenumfang der Reibringe (3, 4) vorstehen.

6. Bremsscheibe nach Anspruch 5, **dadurch gekennzeichnet, daß** zwischen den Längsschenkel (12b, 13b) der L-förmigen Abschnitte (12, 13) axiale Öffnungen (17) ausgebildet sind, welche in die Zuleitungen (11) münden und/oder einen Teil der Zuleitungen (11) bilden.

7. Bremsscheibe nach einem der vorstehenden Ansprüche, **dadurch gekennzeichnet, daß** Zwischenelemente (9) zum axialen Fixieren der Bremsscheibe (1) auf den Nocken (7) der Nabe (8) vorgesehen sind, welche zwischen die Nocken und die Abstützelemente setzbar sind.

8. Achsnabe (8) und/oder an der Achsnabe (8) anbringbarer Adapter mit einer Bremsscheibe nach einem der vorstehenden Ansprüche, wobei die Achsnabe (8) und/oder der zwischen Achsnabe und Bremsscheibe einbringbare Adpater mit radial nach innen oder seitlich axial nach außen geöffneten Nabenbohrungen (14) oder Nabenöffnungen (15) zur Zuleitung von Kühlluft in die Bohrungen der Abstützelemente (6) und/oder direkt in den zwischen den Reibringen ausgebildeten Luftkanal (5) ausgebildet sind, wobei die Nocken (7) mit Nockenöffnungen (16) versehen sind, welche den axialen Außenseiten der Nocken (7) bohrungsartig ausgehend in den Luftkanal (5) führen, **dadurch gekennzeichnet, daß** die Nockenöffnungen (16) geneigt zur Bremsscheibenebene verlaufen.

## Claims

1. A brake disc for disc brakes in vehicles, in particular for pneumatically actuated disc brakes in utility vehicles, which has the following:
two friction rings (3,4) joined together by means of webs (2) and between which is formed at least one air channel (5),
supporting elements (6) formed around the internal circumferential area of the brake disc which are designed to engage in cams on a hub on an axle of the (utility) vehicle,
the supporting elements bridging the air channel (5) at the internal circumference of the brake disc (1) in the manner of webs and the outer surfaces (3a, 4a) of the friction rings (3, 4) thereby being positioned a certain axial distance from the outer surfaces (6a) of the supporting elements (6),
**characterised in that**
the distance (s) between the outer surfaces (3a, 4a) of the friction rings (3, 4) and the outer surfaces (6a) of the supporting elements (6) fulfils the following condition: 3⇐bs/s.⇐6, where bs is the disc thickness.

2. A brake disc in accordance with claim 1,
**characterised in that**
the supporting elements (6) are provided with supply lines (11) for supplying cooling air into the air channel (5).

3. A brake disc in accordance with claim 2,
**characterised in that**
the supply lines are designed as holes (11) which run essentially radially in relation to the brake disc.

4. A brake disc in accordance with one of claims 1 to 3,
**characterised in that**
the supporting elements (6) are essentially T-shaped, the webs of each T being provided with the radially running supply line (11) for cooling air.

5. A brake disc in accordance with one of the preceding claims,
**characterised in that**
the T-shaped supporting elements (6) are each formed of two L-shaped sections (12, 13), the bases (12a, 13a) of these two L-shaped sections (12, 13) lying adjacent to one another extending radially into the air channel (5) and the longitudinal legs (12b, 13b) of the L-shaped sections (12, 13) projecting radially inwards beyond the internal circumference of the friction rings (3, 4).

6. A brake disc in accordance with claim 5,
**characterised in that**
provided between the longitudinal legs (12b, 13b) of the L-shaped sections (12, 13) are axial openings (17) which discharge into the supply lines (11) and/or form part of the supply lines (11).

7. A brake disc in accordance with one of the preceding claims,
**characterised in that**
intermediate elements (9) which can be placed between the cams and the supporting elements are provided to fix the brake disc (1) axially onto the cams (7) on the hub (8).

8. An axle hub (8) and/or an adapter which can be fitted to an axle hub (8) with a brake disc in accordance with one of the preceding claims, the axle hub (8) and/or the adapter which can be inserted between the axle hub and the brake disc being provided with radially inward or laterally axially outward opening hub holes (14) or hub openings (15) for the supply of cooling air into the holes in the supporting elements (6) and/or directly into the air channel (5) formed between the friction rings, the cams (7) being provided with cam openings (16) which lead from the axial outsides of the cams (7) into the air channel (5) in the manner of holes,
**characterised in that**
the cam holes (16) run at an angle to the plane of the brake disc.

## Revendications

1. Disque de frein pour freins à disque de véhicules, notamment pour freins à disque à actionnement pneumatique de véhicules utilitaires, comportant
deux bagues (3, 4) de friction, qui sont mutuellement reliées par des entretoises (2) et entre lesquelles est formé au moins un canal (5) d'air,
des éléments (6) de soutien formés sur la région de pourtour intérieur du disque de frein, qui sont conçus pour pénétrer dans des ergots d'un moyeu sur un essieu du véhicule (utilitaire),
les éléments (6) de soutien, sur le pourtour intérieur du disque (1) de frein, surmontant le canal (5) d'air à la manière d'entretoises et les faces (3a, 4a) extérieures des bagues (3, 4) de friction étant axialement distantes des faces (6a) extérieures des éléments (6) de soutien, **caractérisé en ce que** la distance s entre les faces (3a, 4a) extérieures des bagués (3, 4) de friction et les faces (6a) extérieures des éléments (6) de soutien satisfait à la condition suivante : 3⇐ bs/s <=6, où bs est l'épaisseur du disque.

2. Disque de frein suivant la revendication 1, **caractérisé en ce que** les éléments (6) de soutien sont pourvus de conduites (11) d'alimentation d'air de refroidissement dans le canal (5) d'air.

3. Disque de frein suivant la revendication 2, **caractérisé en ce que** les conduites d'alimentation sont réalisées sous la forme de perçages (11) s'étendant essentiellement radialement au disque de frein.

4. Disque de frein suivant l'une des revendications 1 à 3, **caractérisé en ce que** les éléments (6) de soutien ont essentiellement la forme d'un T, les branches du T étant respectivement pourvues de la conduite (11), s'étendant radialement, d'alimentation en air de refroidissement.

5. Disque de frein suivant l'une des revendications précédentes, **caractérisé en ce que** les éléments (6) de soutien en forme de T sont respectivement formés de deux parties (12, 13) en forme de L, les côtés (12a, 13a) de base des deux parties (12, 13) en forme de L s'appliquant l'un contre l'autre et pénétrant radialement dans le canal (5) d'air, et les branches (12b, 13b) longitudinales des parties (12, 13) en forme de L dépassant respectivement radialement vers l'intérieur du pourtour intérieur des bagues (3, 4) de friction.

6. Disque de frein suivant la revendication 5, **caractérisé en ce que** des ouvertures (17) axiales sont formées entre les branches (12b, 13b) longitudinales des parties (12, 13) en forme de L, ouvertures qui débouchent dans les conduites (11) d'alimentation et/ou constituent une partie des conduites (11) d'alimentation.

7. Disque de frein suivant l'une des revendications précédentes, **caractérisé en ce que** des éléments (9) intermédiaires sont prévus pour l'immobilisation axiale du disque (1) de frein sur les ergots (7) du moyeu (8), éléments qui peuvent être placés entre les ergots et les éléments de soutien.

8. Moyeu d'essieu et/ou adaptateur à monter sur le moyeu (8) d'essieu et pourvu d'un disque de frein suivant l'une des revendications précédentes, le moyeu (8) d'essieu et/ou l'adaptateur à insérer entre le moyeu d'essieu et le disque de frein étant pourvus de perçages (14) de moyeu ouverts radialement vers l'intérieur ou d'ouvertures (15) de moyeu ouvertes latéralement/axialement vers l'extérieur, pour l'alimentation en air de refroidissement des perçages des éléments (6) de soutien et/ou directement du canal (5) d'air formé entre les bagues de friction, les ergots (7) étant pourvus d'ouvertures (16) d'ergot qui, en partant des côtés extérieurs axiaux des ergots (7) à la manière de perçages, mènent dans le canal (5) d'air, **caractérisé en ce que** les ouvertures (16) d'ergot s'étendent en inclinaison par rapport au plan du disque de frein.
